# EUROPEAN PATENT APPLICATION

(11) **EP 2 244 498 A1**
(43) Date of publication of application: **27.10.2010**
(21) Application number: 09709751.3
(22) Date of filing: 13.02.2009
(51) Int. Cl.: H04W 16/26

(54) **RADIO COMMUNICATION RELAY DEVICE, RADIO COMMUNICATION BASE STATION DEVICE, RADIO COMMUNICATION SYSTEM, AND RADIO COMMUNICATION METHOD**

(30) Priority: 14.02.2008 JP 2008033552
(71) Applicant: Panasonic Corporation, Kadoma-shi Osaka 571-8501 (JP)
(72) Inventor: NAKAO, Seigo, Osaka-shi, Osaka 540-6207 (JP); HORIUCHI, Ayako, Osaka-shi, Osaka 540-6207 (JP); SAITO, Yoshiko, Osaka-shi, Osaka 540-6207 (JP); MIYOSHI, Kenichi, Osaka-shi, Osaka 540-6207 (JP); ISHII, Yoshikazu, Osaka-shi, Osaka 540-6207 (JP)
(74) Representative: Grünecker, Kinkeldey, Stockmair & Schwanhäusser Anwaltssozietät
(86) International application number: PCT/JP2009/000577
(87) International publication number: WO 2009/101817

(57) **Abstract**

It is possible to provide a radio communication relay device, a radio communication base station device, a radio communication system, and a radio communication method which can effectively use resources and suppress a data delay and system complexity. When a terminal starts an upstream communication with a base station via a repeater in ST403, the base station simultaneously allocates to the terminal, a resource for an initial transmission and a resource for a retransmission by using Grant 1. If the repeater successfully receives UL data transmitted from the terminal in ST404, the repeater relays, in ST406, the UL data transmitted from the terminal, to the base station by using the resource for retransmission which has been allocated to the terminal.

## Description

### Technical Field

The present invention relates to a radio communication relay station apparatus, a radio communication base station apparatus, a radio communication system and a radio communication method.

### Background Art

3GPP-LTE (3rd Generation Partnership Project-Long Term Evolution) defines that downlink (DL) signals are transmitted using OFDM and uplink (UL) signals are transmitted using SC-FDMA (Single Carrier FDMA). This is the result by individually optimizing, from the perspectives of the efficiency of use of frequencies, complexity, peak to average power ratio (PAPR) and so forth because although base stations (eNBs) that transmit DL signals are allowed to consume high power, terminals (MSs) that transmit UL signals are required to consume low power in mobile communication. In addition, according to 3GPP-LTE, base stations perform entire frequency scheduling in the same way as in usual cellular systems.

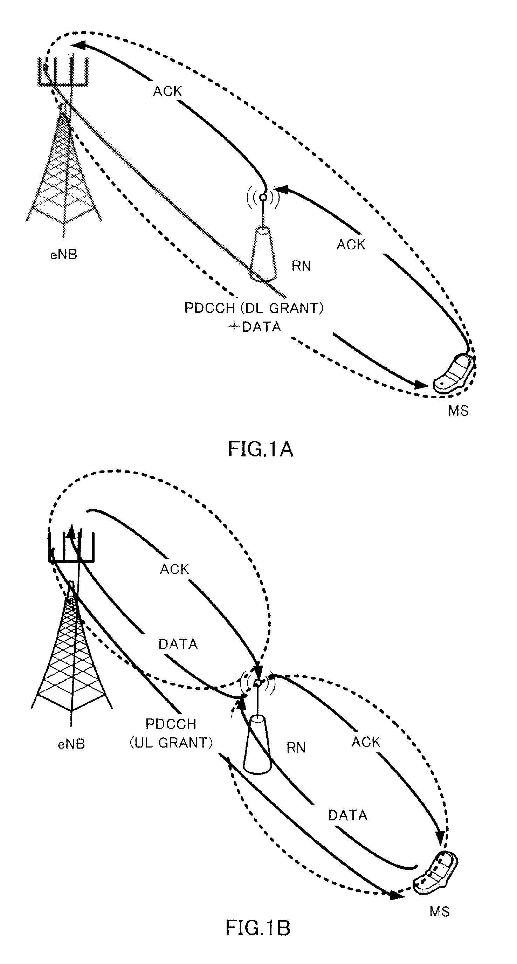

As described above, it is possible to make eNB transmission power significantly higher than MS transmission power, so that, generally, the quality of UL signals is more likely to deteriorate than the quality of DL signals. Therefore, utilization of UL repeaters (Relay Node: RN) that have a function to relay only UL signals and reduce cost is under study. FIG. 1 is a conceptual diagram showing an RN that relays UL signals. The PDCCH (Physical Downlink Control Channel) in the figure includes allocation information about DL data transmitted from the eNB (e.g. frequency band, MCS and data size), or allocation information about resources to be used to transmit UL data of the MS (e.g. frequency band, MCS and data size). Here, the MCS (Modulation and Coding Scheme) represents the modulation method and the coding rate.

As shown in FIG.1, in a system including an RN, an eNB transmits directly, to a target MS, DL data and control information (DL grant) about the allocation. Here, as for UL data, since an MS transmission power is limited, the RN receives once UL data from the MS, reproduces the received data and then relays the result to the eNB. To be more specific, the eNB transmits uplink resource allocation signals (uplink signal transmission grant information or "UL grant") directly to the MS through the PDCCH. The MS determines the resource to be used to transmit its own UL data based on the received UL grant and transmits the U L data to the RN. The RN returns a response signal (ACK or NACK) for the received UL data to the MS and relays the UL data using the allocated resource for communication from the RN to the eNB.

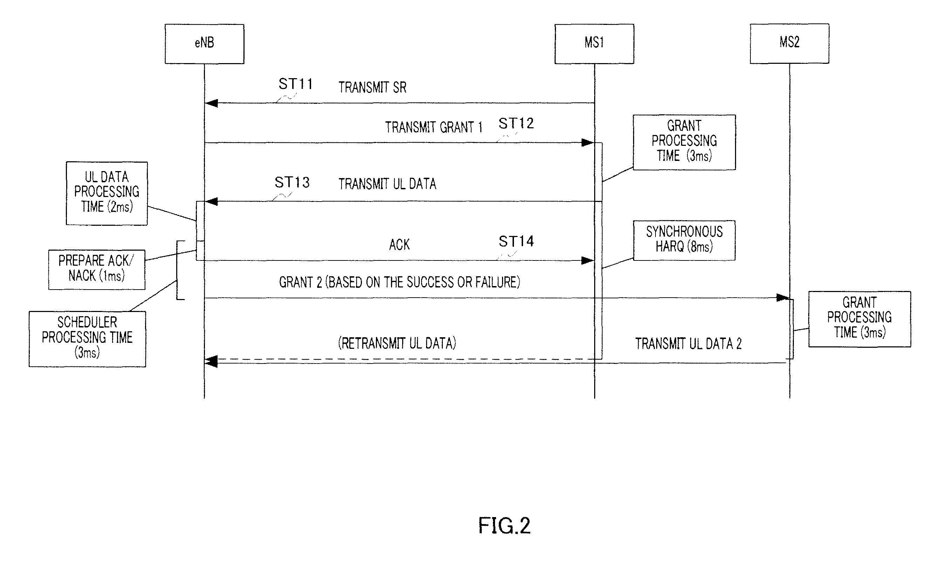

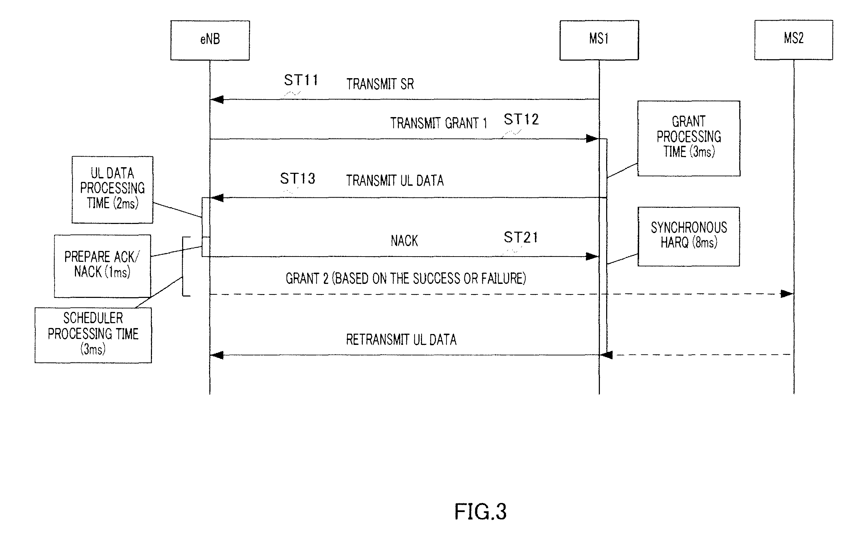

Here, communication steps in a system without an RN (a system in which MS 1 and an eNB directly communicate) will be explained with reference to FIG.2 and FIG.3. FIG.2 is a sequence diagram showing a case in which signal transmission from MS 1 to an eNB is successful, that is, a case in which an eNB transmits an ACK; and FIG.3 is a sequence diagram showing a case in which signal transmission from MS 1 to an eNB fails, that is, a case in which an eNB transmits a NACK.

In FIG.2 and FIG.3, when starting transmitting signals, MS 1 transmits a band allocation request (Scheduling Request: SR) to the eNB in ST 11. In ST 12, the eNB having received the SR transmits a scheduling control signal (Grant 1) to MS 1 through a physical channel such as a PDCCH. In ST 13, upon receiving Grant 1, MS 1 transmits uplink data using time and frequency resources designated by the received Grant 1.

In ST 14 in FIG.2 and in ST 21 in FIG.3, upon receiving uplink data, the eNB returns an ACK or NACK to the MS depending on whether the decoding of data succeeds or fails. When the eNB fails to receive a signal transmitted from MS 1, since MS 1 retransmits a signal after a certain period of time (after 8 ms in FIG.3) using synchronous HARQ, the eNB has to reserve the same resource without allocating it to another terminal (MS 2) after 8 ms. Here, when successfully receiving a signal transmitted from MS 1, the eNB may allocate the same resource to another MS 2 after 8 ms as shown in FIG.2.

By using this synchronous HARQ, even if retransmission occurs in communication between an MS and an eNB, it is possible to control data retransmission without creating and transmitting again Grant information carrying a relatively large amount of information, so that it is possible to improve the efficiency of use of control resources. Hereinafter the time period (8 ms in FIG.3) until an MS retransmits data after transmitting data at the first time and receiving an NACK will be referred to as RTT (Round Trip Time).

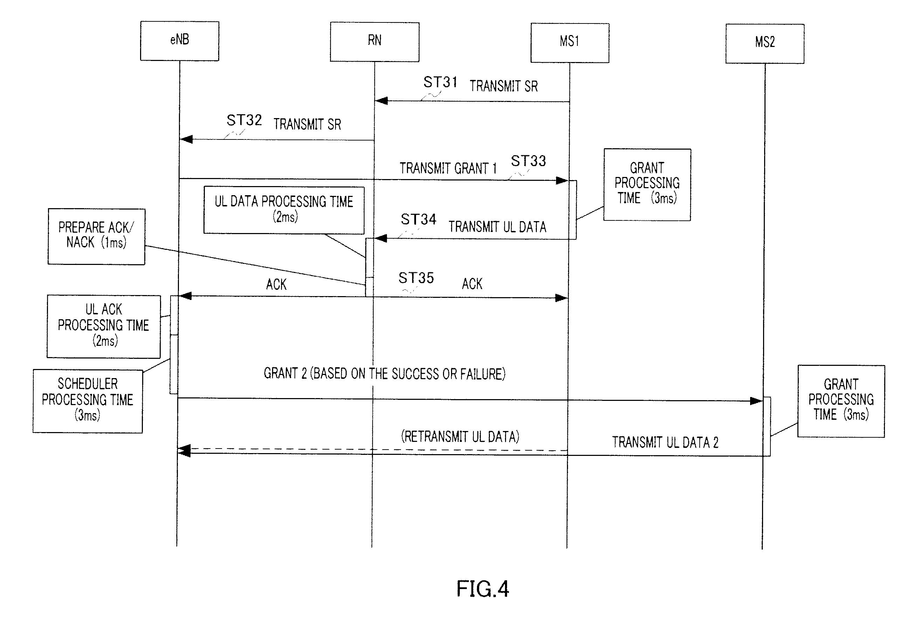

FIG.4 is a sequence diagram showing communication steps between an eNB and MSs via an RN. Here, since the coverage for DL signals is wider than that for UL signals as described above, an RN is assumed as the UL-RN that relays only UL signals in the same way as in FIG.1. In addition, in order to simplify resource management, the eNB centrally manages all resources and allocates them to MSs.

When starting transmitting signals, MS 1 transmits an SR to the RN in ST 31, and the RN relays the SR to the eNB in ST 32. In ST 33, upon receiving the SR, the eNB transmits Grant 1 directly to MS 1 through a physical channel such as a PDCCH. In ST 34, upon receiving Grant 1, MS 1 transmits UL data in accordance with its allocation information. Here, since the eNB is not able to directly receive UL data, the RN receives once UL data and transmits an ACK or NACK to MS 1 and the eNB depending on whether the decoding succeeds or fails.

Upon receiving a signal from MS 1 without error, the RN transmits ACKs to both MS 1 and the eNB in ST 35 as shown in FIG.4. Upon receiving the ACK from the RN, the eNB judges that data transmission from MS 1 to the RN has been successful and gives a command to the RN to perform relay. In addition, since the retransmission resource for MS 1 is no longer used, this resource is allocated to, for example, another terminal (MS 2).

When signal transmission from MS 1 to the RN fails, the RN transmits NACKs to both MS 1 and the eNB. Upon confirming the NACK from the RN, the eNB needs to reserve the retransmission resource for MS 1 in order to retransmit UL data from MS 1 using synchronous HARQ.

Here, the RN has to receive signals transmitted from MS 1 in a UL frequency band and transmit the received signals to the eNB in the same UL frequency band. Therefore, here, it is assumed that the uplink resource from an MS to an RN and the uplink resource involved in relay from the RN to the eNB are used by TDD in the time domain, and, in addition, these resources are distributed in the frequency domain and allocated to the MS or the RN by central control by the eNB. As described above, by using channel arrangement allowing a frequency diversity effect on a constant basis, even if the eNB does not know in detail UL channel information between MS 1 and the RN or UL channel information between the RN and the eNB, it is possible to perform scheduling without problems. In addition, since reception resources and transmission resources seen from the RN are divided by TDD, the RN does not need to have a plurality of RFs, so that the configuration of the RN becomes simple.
Non-Patent Document 1: 3GPP TS 36.211 V8.0.0, "Physical Channels and Modulation (Release 8)," Sep. 2007

### Disclosure of Invention

### Problems to be Solved by the Invention

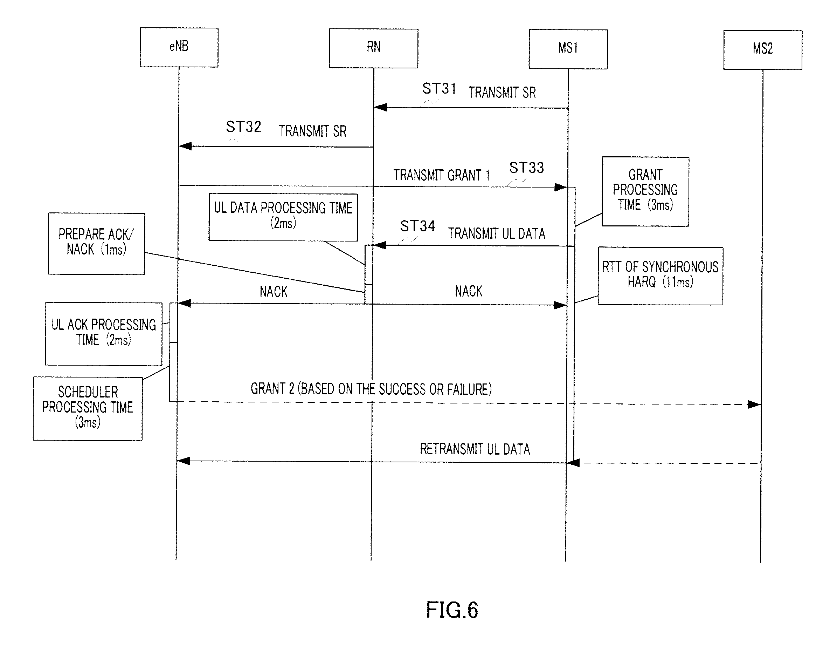

As for the above-described system including an RN, it is necessary to increase RTT in synchronous HARQ for reasons of the RN processing time (11 ms in the figure) as shown in FIG.6, so that data transmission delay increases when retransmission occurs. This delay is likely to result in unsatisfactory QoS. Moreover, the situation is possible in which the eNB communicates with an MS via the RN and, at the same time, also communicates with another MS not involving the RN. In this case, the eNB has to manage a plurality of MSs having different RTTs (MS involving RN: RTT = 11 ms and MS not involving RN: RTT = 8 ms), so that scheduler control becomes complex.

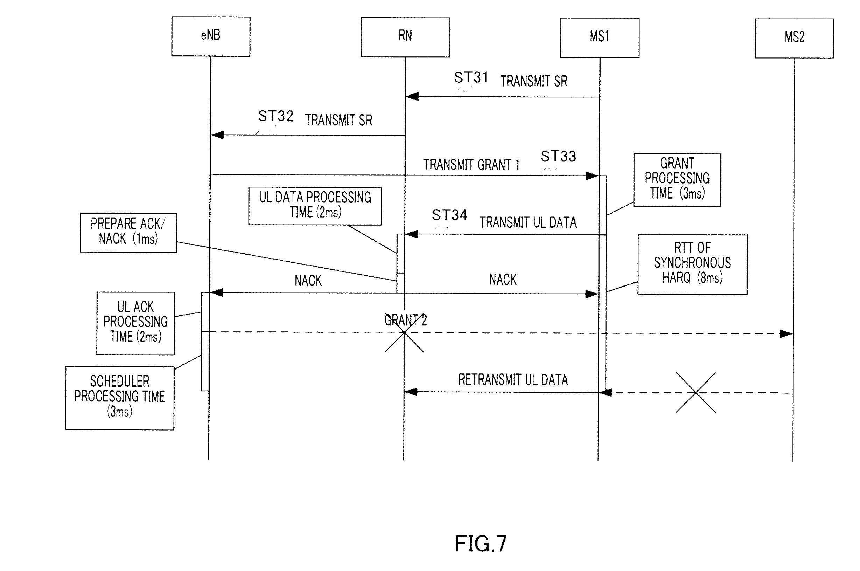

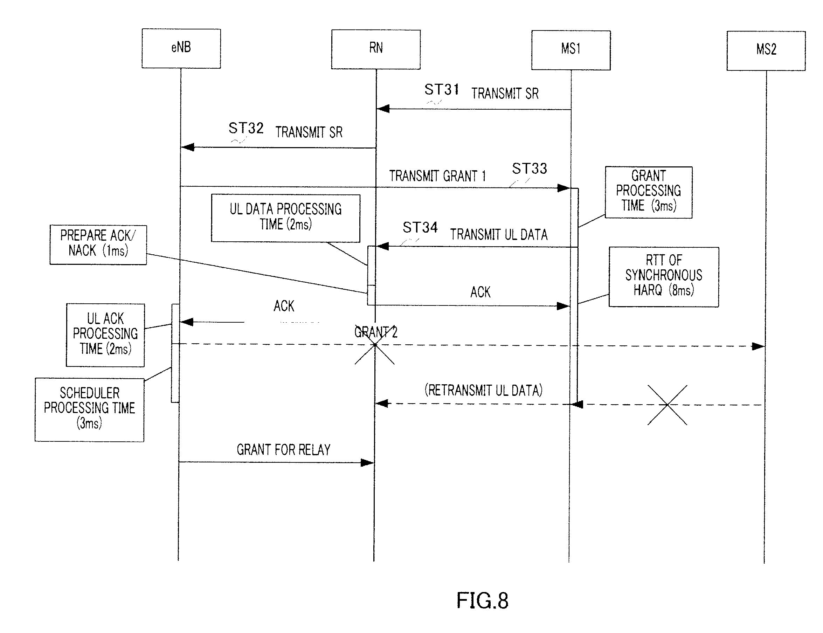

Therefore, in order to fix RTTs for MSs under the control of the eNB by keeping the RTT 8 ms even if an MS involves the RN, a method is proposed in which the eNB reserves the first transmission resource and the retransmission resource at one time and transmits Grant 1. In this case, as shown in FIG.7 and FIG.8, when allocating a resource to MS 1 communicating via the RN, the eNB reserves the retransmission resource for MS 1 at the same time. As shown in FIG.7 and FIG.8, the RN transmits an ACK or NACK depending on whether or not a signal transmitted from MS 1 is successfully received, and the eNB newly allocates a relay resource to the RN at the time the eNB recognizes that the signal transmission from MS 1 to the RN has been successful. That is, an ACK to the eNB serves as an SR for relay data.

By this sequence, MS 1 is able to retransmit data after 8 ms even if MS 1 fails to communicate with the RN as shown in FIG.7. However, when MS 1 successfully communicates with the RN as shown in FIG.8, the retransmission resource is not used, and therefore this resource is wasted. That is, there is a trade-off between efficient use of resources and reduction in data delay and system complexity.

It is therefore an object of the present invention is to provide a radio communication relay station apparatus, a radio communication base station apparatus, a radio communication system and a radio communication method that efficiently use resources and reduce data delay and system complexity.

### Means for Solving the Problem

The radio communication relay station apparatus according to the present invention adopts a configuration including: an error detecting section that detects whether or not there is an error in a signal received from a radio communication terminal apparatus; and a relay section that, when the error detecting section detects that there is no error, relays the signal received from the radio communication terminal apparatus to a radio communication base station apparatus using a retransmission resource having been allocated to the radio communication terminal apparatus.

The radio communication base station apparatus according to the present invention adopts a configuration including: a resource allocating section that allocates a first transmission resource and a retransmission resource simultaneously to a radio communication terminal apparatus that performs uplink communication via a radio communication relay station apparatus; and a transmitting section that transmits the first transmission resource and the retransmission resource allocated, to the radio communication terminal apparatus.

The radio communication system according to the present invention adopts a configuration including: a radio communication base station apparatus including: a resource allocating section that allocates a first transmission resource and a retransmission resource simultaneously to a radio communication terminal apparatus that performs uplink communication via a radio communication relay station apparatus; and a transmitting section that transmits the first transmission resource and the retransmission resource allocated, to the radio communication terminal apparatus; a radio communication terminal apparatus including a transmitting section that transmits a signal from the radio communication terminal apparatus to a radio communication relay station apparatus using the first transmission resource allocated; and a radio communication relay station apparatus including: an error detecting section that detects whether or not there is an error in the signal received from the radio communication terminal apparatus; and a relay section that relays the signal received from the radio communication terminal apparatus to a radio communication base station apparatus using the retransmission resource having been allocated to the radio communication terminal apparatus when the error detecting section detects that there is no error.

The radio communication method according to the present invention includes the steps of: allocating a first transmission resource and a retransmission resource simultaneously to a radio communication terminal apparatus that performs uplink communication via a radio communication relay station apparatus; transmitting a signal from the radio communication terminal apparatus to the radio communication relay station apparatus using the first transmission resource allocated; detecting whether or not there is an error in the signal transmitted from the radio communication terminal apparatus to the radio communication relay station apparatus; and when detecting there is no error, relaying the signal received from the radio communication terminal apparatus to the radio communication base station apparatus using the retransmission resource allocated to the radio communication terminal apparatus.

### Advantageous Effects of Invention

According to the present invention, it is possible to use resources efficiently and reduce data delay and system complexity.

### Brief Description of Drawings

FIG.1 is a conceptual diagram showing RNs that relay UL signals;
FIG.2 is a sequence diagram showing communication steps in a system without an RN;
FIG.3 is a sequence diagram showing communication steps in a system without an RN;
FIG.4 is a sequence diagram showing steps of communication between an eNB and MSs via an RN;

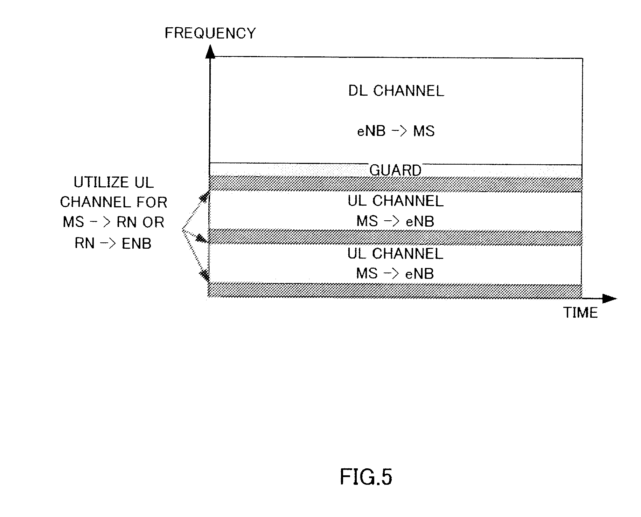

FIG.5 is a drawing showing an exemplary allocation of time and frequency resources;
FIG.6 is a sequence diagram showing steps of communication between an eNB and MSs via an RN when the RTT is greater;
FIG.7 is a sequence diagram showing steps of communication between an eNB and MSs via an RN when the eNB reserves the first transmission resource and a retransmission resource at one time;
FIG.8 is a sequence diagram showing steps of communication between an eNB and MSs via an RN when the eNB reserves the first transmission resource and a retransmission resource at one time;
FIG.9 is a block diagram showing a configuration of a base station according to embodiment 1 of the present invention;
FIG.10 is a block diagram showing a configuration of a terminal according to embodiment 1 of the present invention;
FIG.11 is a block diagram showing a configuration of a repeater according to embodiment 1 of the present invention;
FIG.12 is a sequence diagram showing steps of communication between the base station shown in FIG.9, the terminal shown in FIG.10 and the repeater shown in FIG.11;
FIG.13 is a sequence diagram showing steps of communication between the base station shown in FIG.9, the terminal shown in FIG.10 and the repeater shown in FIG.11;
FIG. 14 is a drawing explaining a case in which the repeater does not transmit, to the base station, a response signal indicating whether or not a signal transmitted from the terminal is successfully received;
FIG.15 is a sequence diagram showing steps of communication between a base station, terminals and a repeater according to embodiment 2 of the present invention; and
FIG.16 is a sequence diagram showing steps of communication between a base station, terminals and a repeater according to embodiment 2 of the present invention.

### Best Mode for Carrying Out the Invention

Now, embodiments of the present invention will be described in detail with reference to the accompanying drawings.

### (Embodiment 1)

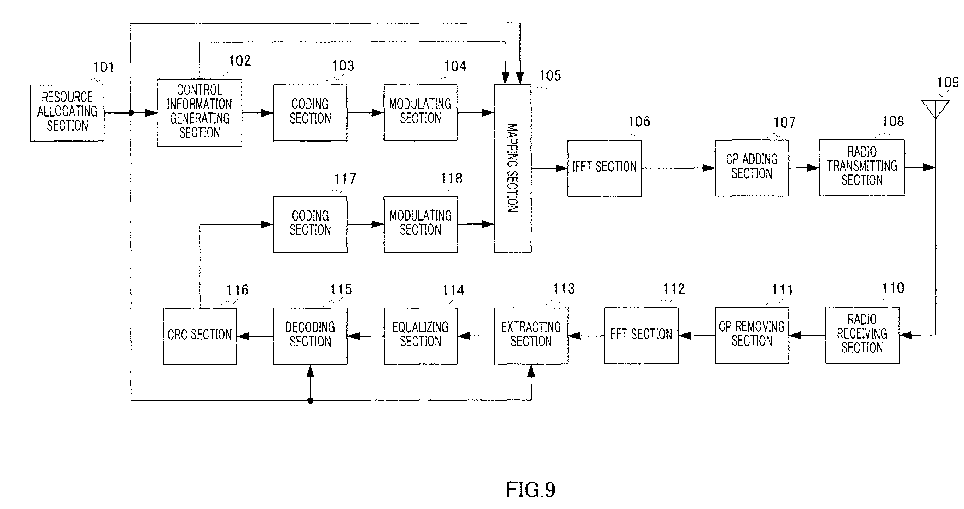

The configuration of a base station according to embodiment 1 of the present invention will be described with reference to FIG.9. In this base station, resource allocating section 101 allocates the first transmission resource and a retransmission resource for UL data simultaneously to terminals and outputs the resource allocation result to control information generating section 102, mapping section 105, extracting section 113 and decoding section 115.

Control information generating section 102 generates control information to report the resource allocation result outputted from resource allocating section 101 per terminal and per repeater (relay station) and outputs them to coding section 103. Here, control information per terminal and per repeater includes ID information indicating the terminal or the relay station to be the destination of that control information. For example, control information includes CRC bits masked with the ID number of the terminal to be the destination of that control information as terminal ID information.

Coding section 103 encodes control information outputted from control information generating section 102 in accordance with coding rate information inputted from a control section and so forth (not shown) and outputs the result to modulating section 104. Modulating section 104 modulates the control information outputted from coding section 103 and outputs the result to mapping section 105.

Mapping section 105 maps control information outputted from modulating section 104 or a response signal outputted from modulating section 118 to frequency resources (i.e. subcarriers) and outputs the mapped signal to IFFT section 106.

IFFT section 106 generates an OFDM symbol by performing the IFFT (Inverse Fast Fourier Transform) on the signal outputted from mapping section 105 and outputs the generated OFDM symbol to CP adding section 107. CP adding section 107 adds the same signal as the rear end part of the OFDM symbol outputted from IFFT section 106 to the beginning part of the OFDM symbol as a CP (Cyclic Prefix) and outputs the result to radio transmitting section 108. Radio transmitting section 108 performs transmission processing on the OFDM symbol outputted from CP adding section 107, including D/A conversion, amplification, up-conversion and so forth, and transmits the result from antenna 109 to the terminal.

Meanwhile, radio receiving section 110 receives UL data transmitted from the repeater via antenna 109, performs reception processing on the UL data, including down-conversion, A/D conversion and so forth, and outputs the result to CP removing section 111.

CP removing section 111 removes the CP added to the UL data outputted from radio receiving section 110 and outputs the result to FFT section 112. FFT section 112 performs the FFT (Fast Fourier Transform) on the UL data outputted from CP removing section 111 and outputs the result to extracting section 113.

Extracting section 113 extracts frequency components allocated to the repeater in the signal outputted from FFT section 112 in accordance with resource allocation information from resource allocating section 101 and outputs the frequency components to equalizing section 114. Equalizing section 114 equalizes UL data outputted from extracting section 113 and outputs the result to decoding section 115.

Decoding section 115 decodes the UL data outputted from equalizing section 114 based on the resource allocation result for the UL data outputted from resource allocating section 101 and outputs the result to CRC section 116. CRC section 116 performs CRC computation of the UL data outputted from decoding section 115. Based on the result of CRC computation, CRC section 116 outputs an ACK to coding section 117 when there is no error, and outputs a NACK to coding section 117 when there is an error.

Coding section 117 encodes the response signal (ACK or NACK) outputted from CRC section 116 and outputs the result to modulating section 118. Modulating section 118 modulates the response signal outputted from coding section 117 and outputs the result to mapping section 105.

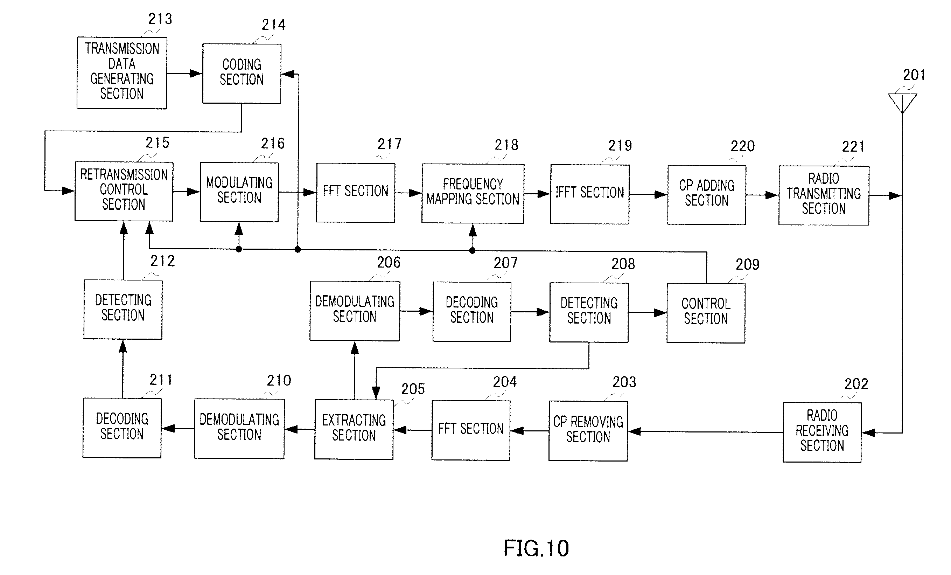

Next, the configuration of a terminal according to embodiment 1 of the present invention will be explained with reference to FIG.10. In this terminal, radio receiving section 202 receives an OFDM symbol including control information from the base station shown in FIG.9 or a response signal from the repeater via antenna 201, performs reception processing on the OFDM symbol, including down-conversion, A/D conversion and so forth, and outputs the result to CP removing section 203. CP removing section 203 removes the CP added to the OFDM symbol outputted from radio receiving section 202 and outputs the result to FFT section 204.

FFT section 204 obtains the control information, a nd the response signal from the subject repeater, which are mapped to a plurality of subcarriers by performing the FFT on the OFDM symbol outputted from CP removing section 203 and outputs them to extracting section 205. Extracting section 205 extracts the control information and the response signal from a plurality of subcarriers outputted from FFT section 204, outputs the control information to demodulating section 206 and outputs the response signal to demodulating section 210.

Demodulating section 206 demodulates the control information outputted from extracting section 205 and outputs the result to decoding section 207. Decoding section 207 decodes the control information outputted from demodulating section 206 and outputs the result to detecting section 208.

Detecting section 208 performs blind detection as to whether or not the control information outputted from decoding section 207 is directed to the subject terminal. For example, detecting section 208 detects that control information indicating CRC=OK (no error) is directed to the terminal by demasking of CRC bits with the ID number of the subject terminal. Detecting section 208 outputs the control information directed to the subject terminal, that is, the result of resource allocation for UL data to the subject terminal, to control section 209. In addition, detecting section 208 outputs, to extracting section 205, resource information about the response signal from the RN, which is associated, one-on-one, with resources for UL data for the subject terminal.

Control section 209 designates the resource to be used to transmit UL data to frequency mapping section 218 and designates the MCS to coding section 214 and modulating section 216 based on control information directed to the subject terminal outputted from detecting section 208. In addition, when retransmission of UL data occurs, control section 209 gives a command to retransmission control section 215 to retransmit UL data on the timing the RTT after the previous UL data is transmitted.

Demodulating section 210 demodulates the response signal outputted from extracting section 205 and outputs the result to decoding section 211. Decoding section 211 decodes the response signal outputted from demodulating section 210 and outputs the result to detecting section 212.

Detecting section 212 detects whether the response signal outputted from decoding section 211 is an ACK or NACK and outputs the detection result to retransmission control section 215.

Transmission data generating section 213 generates transmission data (UL data) to be transmitted to the base station and outputs the generated data to coding section 214. Coding section 214 encodes the UL data outputted from transmission data generating section 213 in accordance with the MCS (coding rate) outputted from control section 209, and outputs the result to retransmission control section 215.

At the time of the first transmission, retransmission control section 215 holds the UL data outputted from coding section 214 and outputs the UL data to modulating section 216. Retransmission control section 215 holds the UL data until an ACK is reported from detecting section 212, and discards the held UL data when an ACK is reported. In addition, upon receiving a NACK from detecting section 212 as a report, retransmission control section 215 outputs the UL data corresponding to the NACK among the held UL data, at the timing designated from control section 209 (the RTT after the previous UL data is transmitted.)

Demodulating section 216 demodulates the UL data outputted from retransmission control section 215 in accordance with the MCS (modulation method) outputted from control section 209 and outputs the result to FFT section 217. FFT section 217 transforms the time domain UL data into frequency domain UL data by performing the FFT on the UL data outputted from modulating section 216, and outputs the result to frequency mapping section 218.

Frequency mapping section 216 maps the frequency domain UL data outputted from FFT section 217 to the resource (band) outputted from control section 209 and outputs the result to IFFT section 219. IFFT section 219 transforms the frequency domain signal into a time domain signal by performing the IFFT on the signal outputted from frequency mapping section 218 and outputs the result to CP adding section 220.

CP adding section 220 adds a CP to the signal outputted from IFFT section 219 and outputs the result to radio transmitting section 221. Radio transmitting section 221 performs transmission processing on the signal outputted from CP adding section, including D/A conversion, amplification, up-conversion and so forth, and transmits a UL signal from antenna 201 to a repeater.

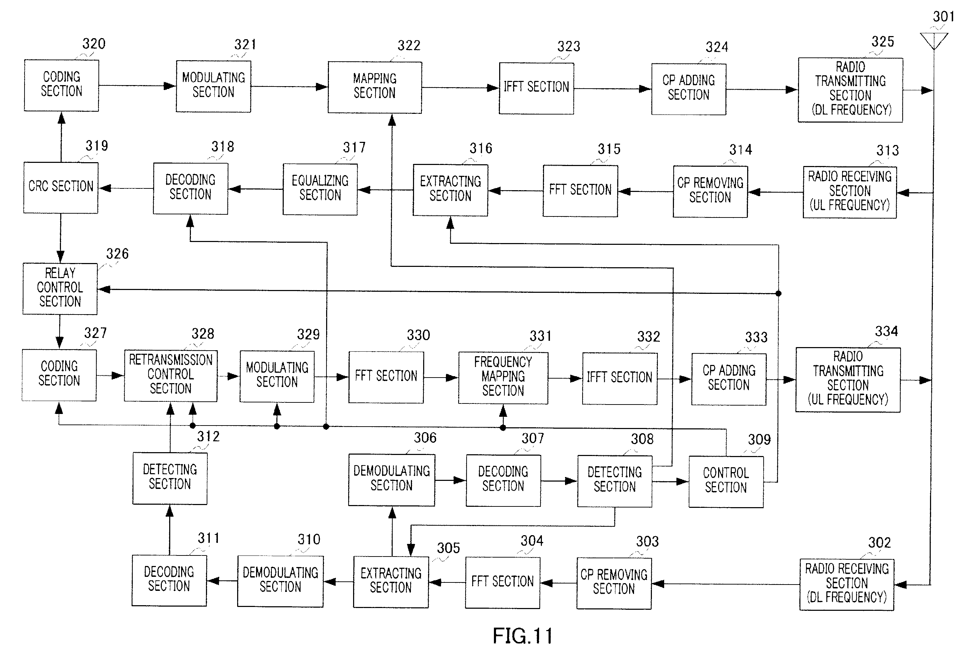

Next, the configuration of a repeater according to embodiment 1 of the present invention will be explained with reference to FIG.11. Radio receiving section (DL frequency) 302 receives, via antenna 301, an OFDM symbol including a control signal transmitted from the base station shown in FIG.9 or a response signal to the repeater, performs reception processing on the received OFDM symbol, including down-conversion, A/D conversion and so forth, and outputs the result to CP removing section 303. CP removing section 303 removes the CP added to the OFDM symbol outputted from radio receiving section 302 and outputs the result to FFT section 304.

FFT section 304 obtains the control information and the response signal mapped to a plurality of subcarriers by performing the FFT on the OFDM symbol outputted from CP removing section 303 and outputs them to extracting section 305. Extracting section 305 extracts the control information and the response signal from a plurality of subcarriers outputted from FFT section 304, outputs the control information to demodulating section 306 and outputs the response signals to demodulating section 310.

Demodulating section 306 demodulates the control information outputted from extracting section 305 and outputs the result to decoding section 307. Decoding section 307 decodes the control information outputted from demodulating section 306 and outputs the result to detecting section 308.

Detecting section 308 performs blind detection as to whether the control information outputted from decoding section 307 is directed to the terminal under the subject repeater, or directed to the subject repeater. For example, detecting section 308 detects that control information indicating that "CRC=OK" (no error) is directed to the terminal under the subject repeater by demasking of CRC bits with the ID number of the terminal under the subject repeater and detects that the control information indicating that "CRC=OK" (no error) is directed to the subject repeater by demasking of CRC bits with the ID number of the subject repeater. Detecting section 308 outputs, to control section 309, control information directed to the terminal under the subject repeater, that is, the result of resource allocation for UL data to the terminal under the subject repeater (the resource to be allocated to the subject repeater to receive data from the terminal) and the result of resource allocation for UL data to the subject repeater (the resource to be allocated to the subject repeater to relay data from the terminal.) In addition, detecting section 308 outputs, to mapping section 322, resource information that is associated, one-on-one, with resources for UL data for the terminal under the subject repeater and related to the response signal to be transmitted from the subject repeater, and outputs, to extracting section 305, resource information that is associated, one-on-one, with resources for UL data for the subject repeater and related to the response signal from the base station.

Control section 309 extracts information about the resource and the MCS which is likely to be used by the terminal to transmit UL data based on the content of control information directed to the terminal under the repeater, outputs the information about resource to extracting section 316 and outputs the information about MCS to decoding section 318. In addition, control section 309 designates, to frequency mapping section 331, the resource to be used to transmit UL data and designates the MCS to coding section 327 and modulating section 329 based on the control information directed to the repeater outputted from detecting section 308. In addition, when retransmission of UL relay data occurs, control section 309 designates the retransmission timing of UL relay data, to retransmission control section 328.

Meanwhile, demodulating section 310 demodulates the response signal outputted from extracting section 305, that is, the response signal to the uplink relay signal from the base station and outputs the result to decoding section 311. Decoding section 311 decodes the response signal outputted from demodulating section 310 and outputs the result to detecting section 312.

Detecting section 312 detects whether the response signal outputted from coding section 311 is an ACK or NACK and outputs the detection result to retransmission control section 328.

Radio receiving section (UL frequency) 313 receives UL data transmitted from the terminal shown in FIG.10 via antenna 301, performs reception processing on the received UL data, including down-conversion, A/D conversion and so forth, and outputs the result to CP removing section 314.

CP removing section 314 removes the CP added to the UL data outputted from radio receiving section 313 and outputs the result to FFT section 315. FFT section 315 performs the FFT on the UL data outputted from CP removing section 314 and outputs the result to extracting section 316.

Extracting section 316 extracts, in accordance with resource information outputted from control section 309, the frequency component in UL data outputted from FFT section 315, which is allocated to the terminal under the subject repeater. Equalizing section 317 equalizes the UL data outputted from extracting section 316 and outputs the result to decoding section 318.

Decoding section 318 decodes the UL data outputted from equalizing section 317 and outputs the result to CRC section 319. CRC section 319 performs CRC computation on the UL data outputted from decoding section 318. Based on the result of CRC computation, CRC section 319 outputs, to coding section 320 and relay control section 326, ACKs when there is no error and NACKs when there is an error. In addition, upon judging that there is no error in UL data, CRC section 319 outputs the UL data to relay control section 326.

Coding section 320 encodes the response signal (ACK or NACK) outputted from CRC section 319 and outputs the results to modulating section 321. Modulating section 321 modulates the response signal outputted from coding section 320 and outputs the result to mapping section 322.

Mapping section 322 maps the response signal outputted from modulating section 321 to the frequency resources (i.e. subcarriers) designated by detecting section 308 and outputs the mapped signal to IFFT section 323. IFFT section 323 performs the IFFT on the signal outputted from mapping section 322 and outputs the result to CP adding section 324.

CP adding section 324 adds a CP to the signal outputted from IFFT section 323 and outputs the result to radio transmitting section (DL frequency) 325. Radio transmitting section (DL frequency) 325 performs transmission processing on the signal outputted from CP adding section 324, including D/A conversion, amplification, up-conversion and so forth, and transmits the result from antenna 301 to the terminal.

Upon receiving an ACK and UL data from CRC section 319, relay control section 326 holds the UL data. In addition, relay control section 326 outputs the held UL data to coding section 327 according to a command from control section 309.

Coding section 327 encodes UL relay data according to the MCS (coding rate) outputted from control section 309 and outputs the result to retransmission control section 328.

When first relaying and transmitting UL data, retransmission control section 328 holds the UL data outputted from coding section 327 and outputs the UL data to modulating section 329. Retransmission control section 328 holds the UL data until an ACK is reported from detecting section 312, and, when an ACK is reported, discards the held UL data. In addition, when a NACK is reported from detecting section 312, retransmission control section 328 outputs, to modulating section 329, the UL relay data corresponding to the NACK, among the held UL relay data, at the timing designated by control section 309.

Modulating section 329 modulates the UL relay data outputted from retransmission control section 328 according to the MCS (modulation method) outputted from control section 309 and outputs the result to FFT section 330. FFT section 330 performs the FFT on the UL relay data outputted from modulating section 329 to transform the time domain UL relay data into frequency domain UL relay data and outputs the result to frequency mapping section 331.

Frequency mapping section 331 maps the frequency domain UL relay data outputted from FFT section 330 to the resource (band) outputted from control section 309 and outputs the result to IFFT section 332.

IFFT section 322 performs the IFFT on the signal outputted from frequency mapping section 331 and outputs the result to CP adding section 333.

CP adding section 333 adds a CP to the signal outputted from IFFT section 332 and outputs the result to radio transmitting section (UL frequency) 334. Radio transmitting section (UL frequency) 334 performs transmission processing on the signal outputted from CP adding section 333, including D/A conversion, amplification, up-conversion and so forth, and transmits the result from antenna 301 to the base station.

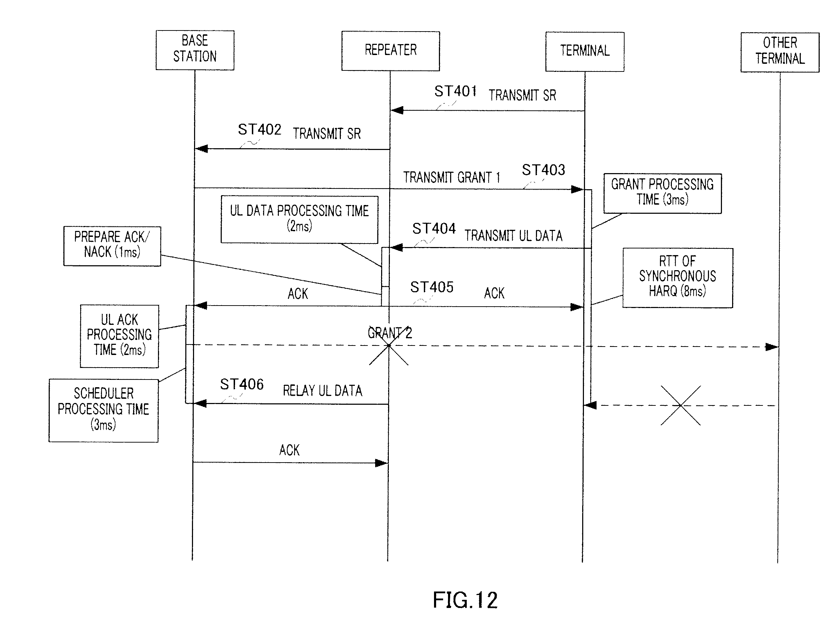

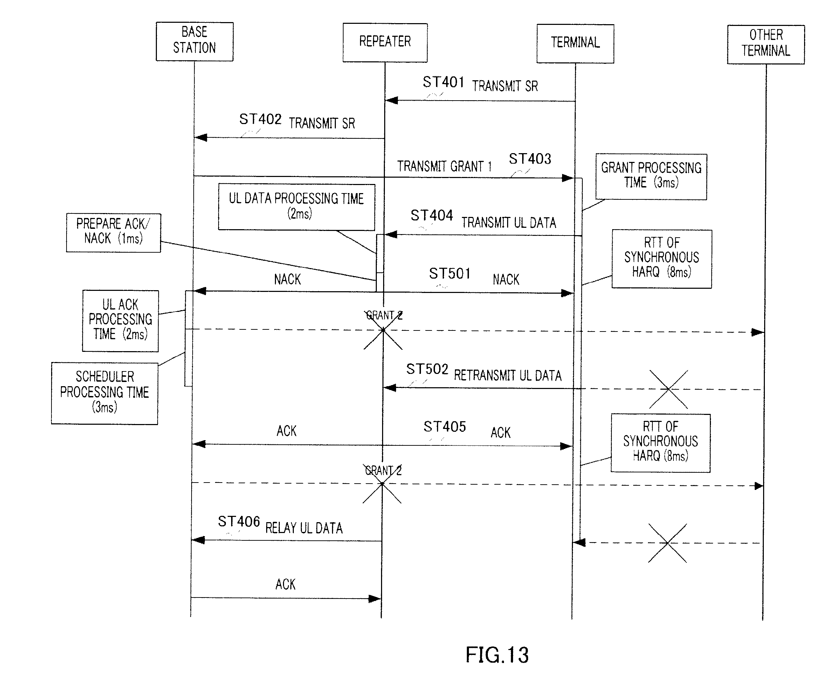

Next, communication steps related to the above-described base station, terminal and repeater will be explained with reference to FIG.12 and FIG.13. In FIG.12 and FIG.13, when the terminal starts transmitting signals, a band allocation request (scheduling request: SR) is transmitted from the terminal to the repeater in ST 401, and the repeater relays the SR to the base station.

In ST 403, upon receiving the SR, the base station allocates the first transmission resource and the retransmission resource simultaneously to the terminal and directly transmits Grant 1 indicating this allocation to the terminal. At this time, the repeater captures Grant 1 transmitted from the base station and recognizes the content of Grant 1. In ST 404, the terminal having received Grant 1 transmits UL data to the repeater in accordance with that allocation information.

When receiving the UL data transmitted from the terminal without error, the repeater transmits ACKs to both the terminal and the base station as shown in ST 405 in FIG.12. The terminal having received the ACK from the repeater does not perform retransmission and the repeater uses the retransmission resource. That is, if the repeater successfully receives UL data transmitted from the terminal (CRC=OK), the repeater relays the UL data to the base station after 8 ms, using the same resource used to receive signals from the terminal (information recognized from Grant 1 by capturing Grant 1 transmitted from the base station) in ST 406. At this time, the same MCS as the MCS used for reception from the terminal under the repeater is used.

In addition when receiving, from the repeater, an ACK for communication from the terminal to the repeater, the base station determines that the resource reserved for retransmission from the terminal is used by the repeater and receives relay signals from the repeater.

On the other hand, when there is an error in UL data transmitted from the terminal, the repeater transmits NACKs to both the terminal and the base station as shown in ST 501 in FIG.13. In ST 502, the terminal having received the NACK from the repeater retransmits uplink data using the same frequency resource 8 ms after transmitting the first data, and the repeater receives that signal. In addition, when the base station receives a NACK for communication from the terminal to the repeater, the same uplink resource for a third transmission (after 16 ms) is reserved taking account a possibility of occurrence of a third transmission (a second retransmission) for this UL data.

Here, the base station transmits an ACK or NACK on the DL channel depending on whether or not the UL data (relay data) transmitted from the repeater is successfully received. The repeater receives the ACK or NACK from the base station through the radio receiving section (DL frequency). By this means, retransmission between the repeater and the base station is controlled.

As described above, according to embodiment 1, when a terminal starts uplink communication with a base station via a repeater, the base station allocates the first transmission resource and a retransmission resource simultaneously to the terminal, and, when the repeater successfully receives UL data transmitted from the terminal, the repeater relays, to the base station, the UL data transmitted from the terminal using the retransmission resource allocated to the terminal. Therefore, even if retransmission is not performed, the retransmission resource is used for relay, and consequently, it is possible to use resources efficiently. Moreover, since it is not necessary to change the RTT per terminal whether or not a repeater is involved, it is possible to reduce data delay and system complexity.

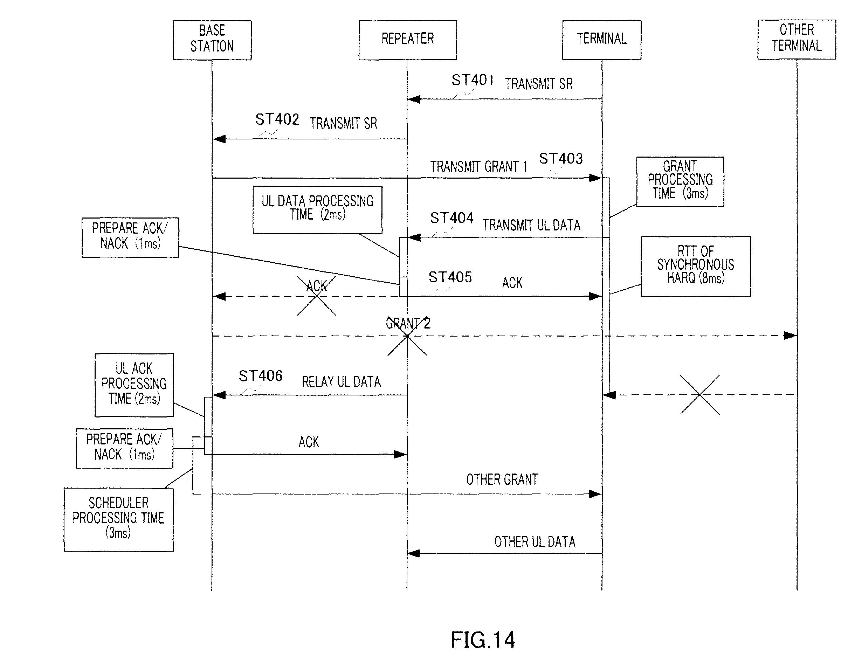

Here, the repeater may not need to transmit response signals (ACKs or NACKs) indicating whether or not signals transmitted from the terminal are successfully received, to the base station. Now, this case will be explained with reference to FIG.14. When the repeater successfully receives a signal from the terminal, the repeater returns an ACK to the terminal and relays UL data 8 ms after receiving the signal from the terminal. When the repeater fails to receive a signal from the terminal, the repeater transmits a NACK to the terminal.

Upon receiving the signal, the base station determines whether or not communication between the terminal and the repeater is successful by detecting whether the same resource is used by the terminal as the resource used for transmission from the terminal or the repeater 8 ms after the transmission from the terminal. That is, ACKs or NACKs associated with the success or failure of communication from the terminal to the repeater are implicitly transmitted to the base station.

This ACK/NACK detection in the base station is allowed by, for example, detection based on the received power on the base station side (the power for transmission from the repeater > the power for transmission from the terminal), or the same method as a PDCCH (a method of masking CRC bits with the ID number.) By this means, it is possible to reduce response signals (ACKs/NACKs) transmitted from the repeater to the base station, and it is possible to improve the efficiency of use of resources.

Here, although the present embodiment has been described such that, when a repeater relays signals to a base station using retransmission resources for a terminal, the repeater relays signals using the same MCS as the MCS used by the terminal, the repeater may use different MCSs from the MCS used by the terminal according to the repeater's decision when the channel condition between the repeater and the base station is better than the channel condition between the terminal and the repeater. At this time, the base station performs blind detection on the MCS used by the terminal. For example, the base station decodes signals from the repeater using a plurality of MCS candidates and determines the MCS indicating "CRC=OK" as the MCS used.

In addition, with the present embodiment, the term "data retransmission" is used, this not only means that the same data is transmitted, but also includes a method to transmit, for example, data and part of parity bits for a first time, and, for a second time, transmit parity bits different from the parity bits transmitted for a first time. That is, the present invention is not limited to retransmission control methods.

### (Embodiment 2)

The Configurations of a base station, a terminal and a repeater according to embodiment 2 of the present invention are the same as the configurations shown in FIG.9, FIG.10 and FIG.11 according to embodiment 1, respectively, so that FIG.9 to FIG.11 will be used as support, and descriptions in detail will be omitted.

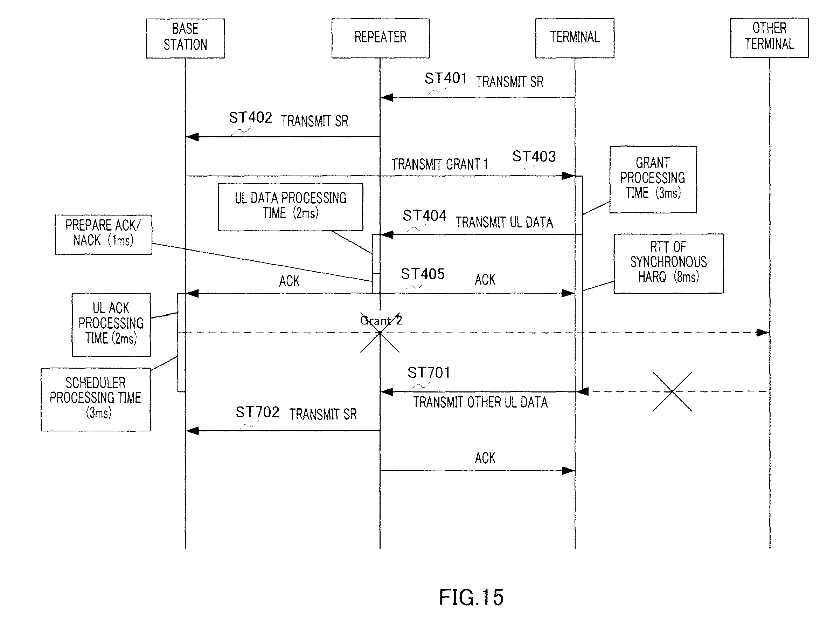

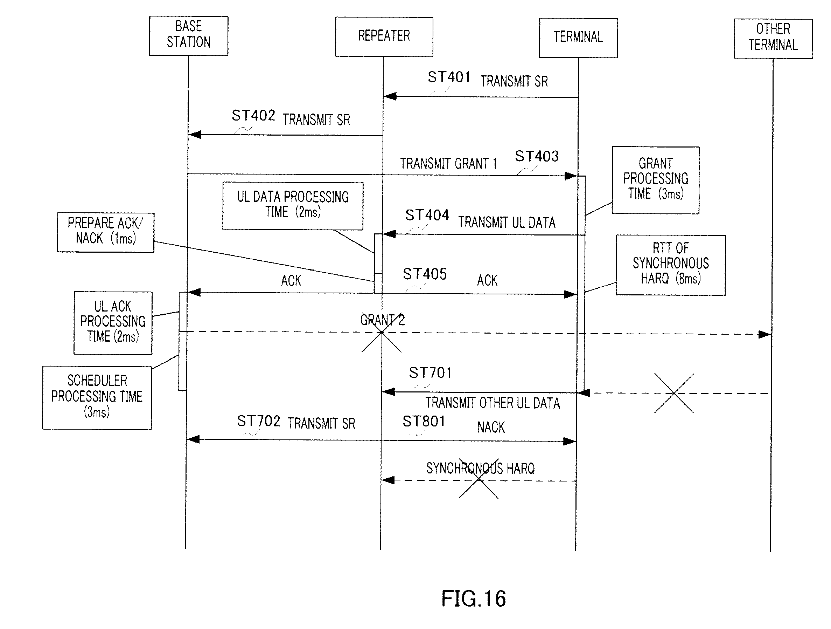

Now, communication steps related to the base station, terminals and the repeater according to embodiment 2 will be explained with reference to FIG.15 and FIG.16. As shown in ST 405 in FIG.15 and FIG.16, when receiving an ACK regarding a UL signal from the repeater, the terminal transmits new data using the resource reserved for retransmission without new signaling with the base station.

Upon receiving a NACK from the repeater, the terminal retransmits data after 8 ms, using synchronous HARQ, and, on the other hand, upon receiving an ACK from the repeater, the terminal can determine that the retransmission resource becomes free after 8 ms, and therefore transmits different data from the UL data transmitted in ST 404 (for example, new data, or retransmission data with a different HARQ process number) in ST 701. By this means, it is possible to reduce required SRs before signal transmission.

At transmitting an ACK to the terminal, it is predictable that the terminal transmits UL data and 8 ms later will transmit different data, so that the repeater is able to receive the different data. Here, as shown in FIG.16, when the repeater fails to receive different UL data in ST 701 and transmits a NACK to the terminal in ST 801, the terminal does not perform retransmission using synchronous HARQ because the base station has not reserved retransmission resources for different UL data transmitted from the terminal to the repeater, and therefore, the terminal waits for the next allocation signal. By this means, it is possible to improve the efficiency of signal transmission from the terminal.

In addition, as shown in ST 702 in FIG.15, when successfully receiving other UL data transmitted from the terminal in ST 701, the repeater transmits a repeater SR for relay to the base station, and, on the other hand, when failing to receive different UL data, the repeater may transmit a terminal SR to the base station to retransmit this data.

As described above, according to embodiment 2, when a terminal starts uplink communication with a base station via a repeater, the base station allocates the first transmission resource and a retransmission resource simultaneously to the terminal, and when the repeater successfully receives UL data transmitted from the terminal, the terminal transmits new data using the allocated retransmission resource. Therefore, even if retransmission is not performed, the retransmission resource is used to transmit new data, and consequently, it is possible to use resources efficiently. Moreover, since it is not necessary to change the RTT per terminal whether or not a repeater is involved, it is possible to reduce data delay and system complexity.

Here, with the present embodiment, although the terminal independently transmits different data, the terminal may transmit SRs for different data using the above-described resources. By this means, it is possible to effectively use resources for SR transmission, and it is possible to maintain retransmission commands from the base station in a simple manner.

### (Embodiment 3)

With embodiment 3, a case will be explained where operations shown in embodiment 1 and operations shown in embodiment 2 are switched.

The configurations of a base station, a terminal and a repeater according to embodiment 3 of the present invention are the same as the configurations shown in FIG.9, FIG.10 and FIG.11 according to embodiment 1, respectively, so that FIG.9 to FIG.11 will be used for support, and descriptions in detail will be omitted. Here, control section 209 in the terminal and relay control section 326 in the repeater hold information indicating whether there has been a command to use a retransmission resource having been prepared for relay by the repeater, or a command to use a retransmission resource having been prepared for transmission of new data from the terminal, when communication from the terminal to the repeater is successful.

In a case that there has been a command to use a retransmission resource having been prepared for relay by the repeater, relay control section 326 in the repeater controls the repeater to perform relay and transmission using a retransmission resource having been prepared when reception from the terminal is successful.

On the other hand, in a case in which there has been a command to use a retransmission resource having been prepared to transmit new data from the terminal, relay control section 326 in the repeater gives a command to extracting section 316 to extract the retransmission resource and operates to allow reception from the terminal, and at the same time, transmits an ACK to the terminal. In addition, when the terminal receives an ACK from the repeater, control section 209 gives a command to transmission data generating section 213 to generate new data, so that new UL data is transmitted.

As described above, according to embodiment 3, it is possible to improve system efficiency by switching between using retransmission resources for relay and using retransmission resources for transmission of new data a from the terminal in accordance with commands from the base station.

Here, with the present embodiment, although a case has been described where how to use retransmission resources is determined in accordance with commands from the base station, how to use retransmission resources may be changed depending on conditions of the terminal and the repeater.

Here, with each of the above-described embodiments, although time and frequency resources and the MCS used for retransmission are the same as in the first transmission (non-adaptive HARQ), different resources and MCSs may be used at the time of retransmission (adaptive HARQ). In this case, it is necessary to explicitly indicate retransmission resources on the base station side, this retransmission resource information is transmitted in synchronization with Grant 1 transmitted from the base station.

In addition, with each of the above-described embodiments, although control information (Grant 1) for resource allocation from the base station is arrived directly at the terminal, the repeater may relay Grant. By this means, it is possible to improve the quality of downlink control signals.

Moreover, although cases have been described with the embodiments above where the present invention is configured by hardware, the present invention may be implemented by software.

Each function block employed in the description of the aforementioned embodiments may typically be implemented as an LSI constituted by an integrated circuit. These may be individual chips or partially or totally contained on a single chip. "LSI" is adopted here but this may also be referred to as "IC," "system LSI," "super LSI" or "ultra LSI" depending on differing extents of integration.

Further, the method of circuit integration is not limited to LSI's, and implementation using dedicated circuitry or general purpose processors is also possible. After LSI manufacture, utilization of an FPGA (Field Programmable Gate Array) or a reconfigurable processor where connections and settings of circuit cells within an LSI can be reconfigured is also possible.

Further, if integrated circuit technology comes out to replace LSI's as a result of the advancement of semiconductor technology or a derivative other technology, it is naturally also possible to carry out function block integration using this technology. Application of biotechnology is also possible.

The disclosure of Japanese Patent Application No.2008-033552, filed on February 14, 2008, including the specification, drawings and abstract, is incorporated herein by reference in its entirety.

### Industrial Applicability

The radio communication relay station apparatus, the radio communication base station apparatus, the radio communication system and the radio communication method allows efficient utilization of resources and reduction in data delay and system complexity, and is applicable to, for example, a mobile communication system.

## Claims

1. A radio communication relay station apparatus comprising:
an error detecting section that detects whether or not there is an error in a signal received from a radio communication terminal apparatus; and
a relay section that, when the error detecting section detects that there is no error, relays the signal received from the radio communication terminal apparatus to a radio communication base station apparatus using a retransmission resource having been allocated to the radio communication terminal apparatus.

2. The radio communication relay station apparatus according to claim 1, wherein, when the error detecting section detects that there is no error, the relay section skips transmission of an acknowledgement to the radio communication base station apparatus.

3. A radio communication base station apparatus comprising:
a resource allocating section that allocates a first transmission resource and a retransmission resource simultaneously to a radio communication terminal apparatus that performs uplink communication via a radio communication relay station apparatus; and
a transmitting section that transmits the first transmission resource and the retransmission resource allocated, to the radio communication terminal apparatus.

4. The radio communication base station apparatus according to claim 3, wherein, upon receiving a report indicating that there is an error from the radio communication relay station apparatus, the resource allocating section allocates an additional retransmission resource to the radio communication terminal apparatus.

5. A radio communication system comprising:
a radio communication base station apparatus including:
a resource allocating section that allocates a first transmission resource and a retransmission resource simultaneously to a radio communication terminal apparatus that performs uplink communication via a radio communication relay station apparatus; and
a transmitting section that transmits the first transmission resource and the retransmission resource allocated, to the radio communication terminal apparatus;
a radio communication terminal apparatus including a transmitting section that transmits a signal from the radio communication terminal apparatus to a radio communication relay station apparatus using the first transmission resource allocated; and
a radio communication relay station apparatus including:
an error detecting section that detects whether or not there is an error in the signal received from the radio communication terminal apparatus; and
a relay section that relays the signal received from the radio communication terminal apparatus to a radio communication base station apparatus using the retransmission resource having been allocated to the radio communication terminal apparatus when the error detecting section detects that there is no error.

6. A radio communication method comprising the steps of:
allocating a first transmission resource and a retransmission resource simultaneously to a radio communication terminal apparatus that performs uplink communication via a radio communication relay station apparatus;
transmitting a signal from the radio communication terminal apparatus to the radio communication relay station apparatus using the first transmission resource allocated;
detecting whether or not there is an error in the signal transmitted from the radio communication terminal apparatus to the radio communication relay station apparatus; and
when detecting there is no error, relaying the signal received from the radio communication terminal apparatus to the radio communication base station apparatus using the retransmission resource allocated to the radio communication terminal apparatus.

## Amended claims

### Amended claims under Art. 19.1 PCT

**1.** A radio communication relay station apparatus comprising:
an error detecting section that detects whether or not a signal which is received from a radio communication terminal apparatus has an error; and
a relay section that relays the signal which is received from the radio communication terminal apparatus, to a radio communication base station apparatus using a retransmission resource having been allocated to the radio communication terminal apparatus, when the error detecting section detects no error.

**2.** The radio communication relay station apparatus according to claim 1, wherein the relay section skips transmission of an acknowledgement to the radio communication base station apparatus, when the error detecting section detects no error.

**3.** A radio communication base station apparatus comprising:
a resource allocating section that allocates a first transmission resource and a retransmission resource simultaneously to a radio communication terminal apparatus which performs uplink communication via a radio communication relay station apparatus; and
a transmitting section that transmits the allocated first transmission resource and the allocated retransmission resource, to the radio communication terminal apparatus.

**4.** The radio communication base station apparatus according to claim 3, wherein, upon receiving a report indicating that a signal has an error from the radio communication relay station apparatus, the resource allocating section allocates an additional retransmission resource to the radio communication terminal apparatus.

**5.** (Amended) A radio communication method comprising:
detecting whether or not a signal which is received from a radio communication terminal apparatus has an error by a radio communication relay station apparatus; and
relaying the signal which is received from the radio communication terminal apparatus, to a radio communication base station apparatus using a retransmission resource having been allocated to the radio communication terminal apparatus, when no error is detected.

**6.** (Amended) A radio communication method comprising:
allocating a first transmission resource and a retransmission resource simultaneously to a radio communication terminal apparatus which performs uplink communication by a radio communication base station apparatus via a radio communication relay station apparatus; and
transmitting the allocated first transmission resource and the allocated retransmission resource, from the radio communication base station apparatus to the radio communication terminal apparatus.
